# EUROPEAN PATENT SPECIFICATION

(11) **EP 0 577 822 B1**
(45) Date of publication and mention of the grant of the patent: **18.12.1996**
(21) Application number: 93904588.6
(22) Date of filing: 22.01.1993
(51) Int. Cl.: G01N 35/02, G01N 33/48

(54) **METHOD AND APPARATUS TO DETECT COAGULATION**
VORRICHTUNG UND VERFAHREN ZUR BESTIMMUNG VON GERINNUNG
PROCEDE ET APPAREIL POUR DETECTER DES REACTIONS DE COAGULATION

(30) Priority: 24.01.1992 US 825615
(43) Date of publication of application: 12.01.1994
(73) Proprietor: DADE INTERNATIONAL INC., Deerfield, Illinois 60015-0778 (US)
(72) Inventor: BACH, David, T., Kalamazoo, MI 49008 (US); COLE, Randall, J., Miami, FL 33176 (US)
(74) Representative: MacGregor, Gordon
(86) International application number: US9300596
(87) International publication number: WO9315408

(56) References cited:
- WO-A-86/02163
- DE-A- 4 013 166
- GB-A- 2 036 364
- US-A- 3 607 099
- US-A- 4 497 774
- US-A- 4 766 078
- US-A- 4 844 887

## Description

### 1. Field of the Invention

The present invention generally relates to a random access coagulation apparatus and methods to randomly detect or determine various coagulation related parameters.

### 2. Description of Prior Art

Coagulation tests are grouped into two major categories: clotting assays and chromogenic assays. Typical clotting assays and chromogenic assays include prothrombin time, activated partial thromboplastin time, fibrinogen, one stage/two stage assay for prothrombin time, thrombin time and assays for blood factors such as Factor VIII:C, antiplasmin III, plasminogen, Factor VIII, Factor IX, Factor X, heparin, alpha-2-anti-plasmin and protein C. Kits containing reagents to conduct these assays are sold to hospitals and clinics; however, for a hospital or clinic to function efficiently these tests generally must be conducted on an automated instrument and preferably one that operates randomly, i.e. an instrument that can conduct more than one of the above discussed assays without requiring a physical change of reagents. Limited random access instruments are currently being sold by MLA. See U.S. Patent Nos. 4,497,774 and 4,367,198. The ELECTRA 700 is a random access photo-optical clot detection system. The ELECTRA 700 uses a reaction container programming technique to process samples on a carousel. Red test cuvettes are used for prothrombin time tests, while blue cuvettes are used for activated partial thromboplastin time tests. Other test results can be correlated from the prothrombin time or activated partial thromboplastin time determinations.

The ELECTRA (MLA Co.) 700, 900, 900C and 1000C series instruments use three pumps to deliver reagents. With only three reagent pumps the instruments can only randomly perform two assays and cannot randomly perform the more complex chromogenic assays that require as many as four reagents. Additionally, the ELECTRA (MLA Co.) series instruments have up to four photometers. To function within these constraints the processing of cuvettes is slowed or stopped so that a proper incubation can occur before clotting or coagulation is detected. This variation in the speed of the carousel results in different throughput rates for different assays; as such a throughput rate of 360 tests per hour is reported for the prothrombin test, but only 136 activated partial thromboplastin tests can be conducted per hour.

DE-A-4013166, US-A-4766078 and US-A-4497724 each disclose an apparatus for the automated addition of a reagent to a blood sample and detection of clotting using a photometer. In DE-A-4013166, a separate reaction wheel is provided respectively for reactions carried out in disposable and re-usable cuvettes, and a single reagent addition station for both wheels is positioned a fixed distance from a photometer region.

A need exists in this industry to produce a true random access coagulation apparatus combined with a high throughput for a number of assays.

The present invention fulfils this need by providing a random access coagulation apparatus as set out in Claim 1. The pre-characterising part of Claim 1 is based on US-A-4766078, and the distinguishing features of the present invention are set out in the characterised part of Claim 1.

The present invention also provides a method of operating this apparatus, as set out in Claim 12.

In particular it is an object of this invention to provide an instrument capable of conducting a family of coagulation tests at the rate of at least 360 tests per hour. Each test can be randomly selected without physically changing reagents or slowing the delivery of results on other tests.

Reagent transfer means and detection means are positioned along the reaction wheel so that a family of coagulation tests can be conducted without slowing the reaction wheel to accommodate various incubation and clotting times for different tests.

In accordance with one embodiment of this invention, an automated system for randomly detecting blood coagulation reactions in a sample of biological fluid is provided which has means for discarding the reaction containers from the reaction wheel.

Preferably, a reaction container wheel stores reaction containers. Reaction containers are driven to a reaction container transfer station cut into units of two reaction containers by a cutting means such as a rotary wheel or opposing blades and the reaction containers are transferred to the reaction wheel. The reaction containers are transferred to the reaction wheel using a reaction container transfer means. The reaction container transfer means may be a shuttle mechanism whereby the units of two reaction containers are uplifted to the reaction wheel. The reaction wheel is preferably a carousel having sixty slots adapted to receive reaction containers. Sample, either plasma or serum, is withdrawn from a sample tube, and placed in a reaction container. The second reaction container in the pair can be used for dilution purposes. An automatic sample transfer mechanism can include a pipette mounted on an arm having two degrees of freedom. This sample transfer means may provide through-the-stopper sampling. U.S. Patent No. 4,951,512, hereby incorporated by reference.

All assay steps are then driven in one embodiment by software that directs the apparatus to perform certain activities. The reaction containers are not physically different one from another, but they are handled differently by the instrument based on the cuvette instructions and a software controlled cuvette processing table.

A driving means, such as a servo motor, indexes the reaction wheel at a constant rate. Preferably, the reaction wheel indexes every ten seconds, although the indexing of the instrument carousel can be adjusted during the setup of an instrument. This results in different speeds depending on the family of assays to be run on the machine.

Reagent addition means are positioned along the reaction wheel to allow for complete incubation prior to detection without changing the indexing interval of the reaction wheel. Reagents are stored in separate reagent reservoir wells. In one embodiment of the reagent storage means, tubing from reservoir wells is fed past a valve and around a pump through a groove formed in the instrument cover plate. A reagent nozzle at the end of the tubing projects downwardly to a designated position on the reaction wheel. Different reagents can be simultaneously added to different reaction containers based on the location of the nozzles and instrument set-up. The present embodiments of the apparatus shown in this application require between three to seven reagent pumps to accommodate the required coagulation assays. As more assays are discovered additional pumps may be required. In particular, some chromogenic assays presently require four different reagents.

A plurality of sensor means for detecting the rate of reaction are provided. The rate of reaction is detected by passing the reaction sample by a plurality of photodetectors. Certain photodetectors in a series may track and measure the rate of reaction for one sample, while another set of photodetectors may simultaneously measure the rate of reaction for another sample. The photodetectors may be bichromatic. One embodiment requires as many as 15 photometers to detect reaction time at a ten second index speed.

### 4. Brief Description of the Figures

Figure 1 shows a schematic diagram of a top view of an embodiment of the apparatus.

Figure 1A shows a schematic diagram of the cutter.

Figure 2 shows a schematic diagram of the reaction containers.

Figure 3 shows a schematic diagram of a top planar view with an embodiment of the reaction containers in the reaction wheel.

Figure 3A shows a schematic diagram of a vertical cross-section through reaction containers and reaction wheel.

Figure 4 shows a schematic diagram of a top view of an embodiment of the instrument.

Figure 5 shows a schematic diagram of a side view of an embodiment of the apparatus.

Figure 6 shows a schematic diagram of the reagent pumping means.

Figure 7 shows a schematic diagram of the reaction wheel of the instrument of Figure 4.

Figure 8 shows a schematic diagram of a top view of an alternative embodiment of the instrument.

Figure 9 shows a schematic diagram of the reaction wheel of the instrument of Figure 8.

Figure 10 shows a schematic diagram of a top view of an alternative embodiment of the instrument.

Figure 11 shows a schematic diagram of the reaction wheel of the instrument shown in Figure 10.

Figure 12 shows a schematic side view of the through-the-stopper sampling mechanism.

In certain instances, the applicants may have omitted details which are not necessary for an understanding of the present invention such as conventional details of fabrication and assembly.

### 5. Detailed Description of the Invention

An instrument system based on time analysis and resulting time segmentation that allows a family of at least 360 tests per hour is set forth in this application. Both clotting and chromogenic assays can be performed on the apparatus. In developing the apparatus, the processing steps by assay were shifted or phased so that an apparatus has a common load, sample transfer and single position reagent stations disposed along the reaction wheel to allow for complete incubation of a sample and reagent prior to detection, without changing the indexing of the apparatus. The apparatus employs a 60 position reaction wheel and at least a fifteen channel photometer to accomplish random analysis of a family of clotting and chromogenic assays.

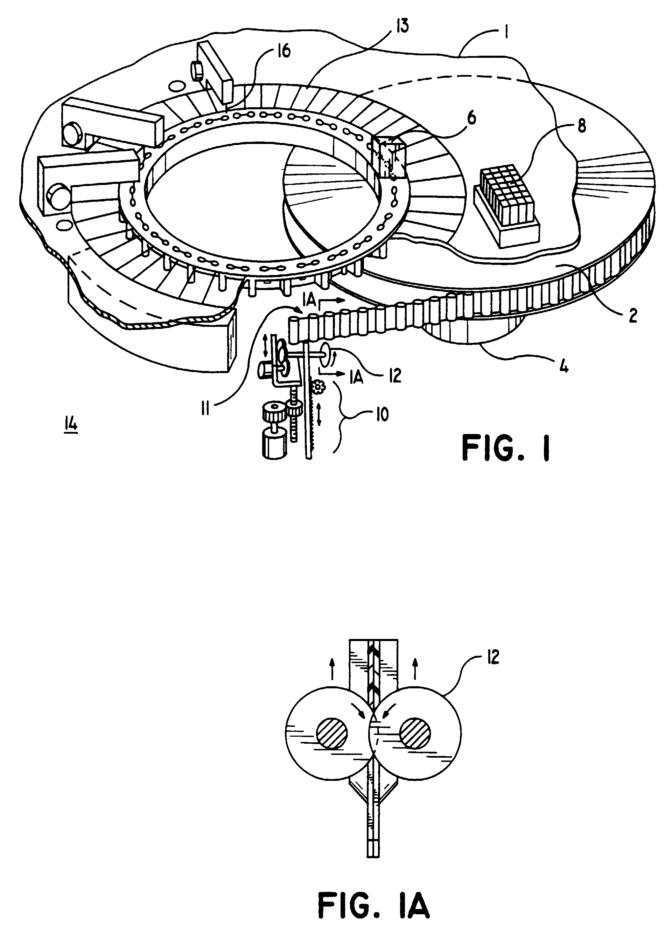

Referring now to figures 1-6, an embodiment of the apparatus is shown generally by reference to numeral 1. This apparatus is designed to perform clotting assays. A reaction container wheel 2 is used to hold a belt of joined reaction containers 4. See Solbert, et al., U.S. Patent No. 4,685,880, incorporated by reference. The reaction containers 4 are spooled off of the reaction container wheel 2. The belt of reaction containers 4 is fed into the reaction container transfer mechanism 10, cut in to units of two reaction containers 11 by cutting wheel 12 and uploaded on to reaction wheel 14. Specifically, the cutting wheel assembly 12 includes a pair of cutting wheels rotatable about spaced, parallel axes. Edge portions of the wheels lie in overlapping relation and co-act to cut a reaction container segment as a motor, gear and axle arrangement rotate the wheels in opposite directions. A conventional screw-type drive moves a support upon which the wheels lie mounted; and accordingly, it moves the wheels, along a predetermined cutting path, i.e., upwardly to cut the cuvette belt and downwardly to its starting position.

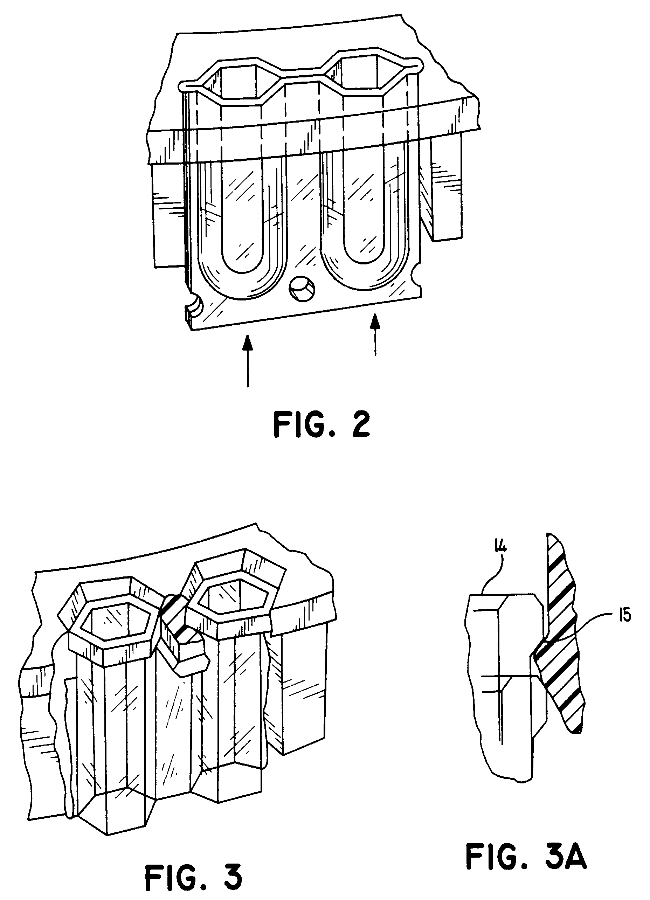

A holder (not shown) releasably secures the reaction containers during the cutting process. It secures the containers along bottom edge portions, opposite the open top portions. A conventional rack and pinion drive lifts the cut reaction container segment, comprising two or more containers into the position shown in Figs. 2 or 3. The unsecured top portion of the cut segment extends into a receiving slot and engages the walls of the slot in pressure contact. Reaction container transfer means 10 may be a shuttle or any other means designed to lift the reaction containers up to the reaction wheel. The reaction containers are added to the reaction wheel 14 in units of two to facilitate dilution of sample or reagents, which can occur in one reaction container. Referring now to Figures 3 and 3A, two reaction containers 11 are held in the reaction wheel 14 by a detent 15. A sampling station is a designated position to receive sample into the reaction containers. A predetermined amount of plasma is manually pipetted to reaction containers 4 from sample tubes 8 to sampling station 6.

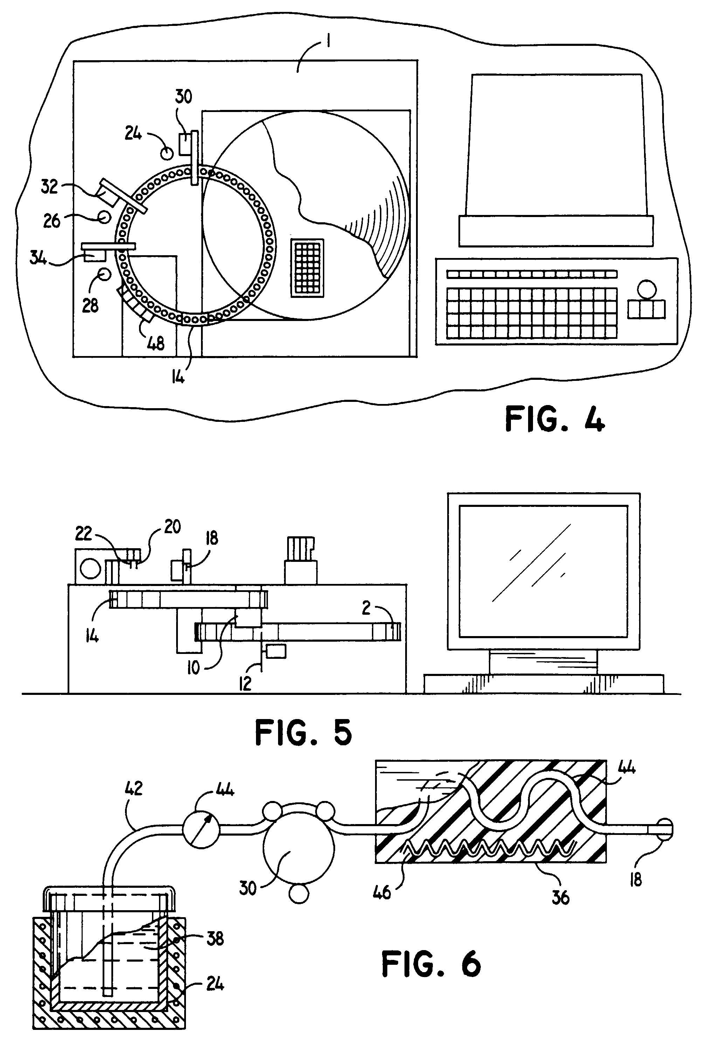

Prior to initiation of reactions, the samples are warmed to 37°C using conventional heating techniques. The reaction wheel 14 is indexed in steps to advance reaction containers 11. The reaction wheel 14 advances the reaction containers 11 by driving means (not shown) such as a servo drive system that assures smooth indexes, but stepper motors (not shown) could be used instead. The reaction wheel 14 has sixty cuvette positions (not shown), and it preferably indexes every 10 seconds. A plurality of reagent pumps 30, 32 and 34 with nozzles 18, 20 and 22 add reagents. For clotting assays these reagents include Actin, CaCl₂ and thromboplastin. Reagent is pumped from three reagent reservoir wells 24 (actin), 26(CaCl₂) and 28 (thromboplastin) from a like number of pumps 30, 32, 34 to deliver measured quantities of reagents to plasma samples for which clotting times are to be determined. Since each reagent pumping system has an identical configuration only the mechanical configuration of reagent pumping to nozzle 18 will be described. See Figure 6. A reagent reservoir 38 is positioned in well 24 and from the reservoir, plastic tubing 42 is fed past valve 44 and around pump 30 through heat exchanger 46 in the instrument cover plate 36. A reagent nozzle 18 at the end of tubing 42 is projected downwardly to reaction containers 11. As the sample indexes on the reaction wheel 14, incubation time is allocated allowing ample time for each reaction container 11 to reach the required temperature.

The rate of reaction is detected by passing the sample by a plurality of photodetectors Fig. 4, 48. Each detector 48 measures a portion of the clotting time to determine the rate of clotting. To provide the desired test throughput the reaction wheel 14 is continuously indexed while reagent is added or while clotting occurs. In this way many different tests can be processed on the reaction wheel 14 at the same time without stopping the indexing of the reaction wheel.

In the present embodiment the position of a sample in a reaction container on the reaction wheel 14 serves to identify the sample, and thus, which reagents are added and which reaction detectors employed in measuring the rate of reaction. The cuvette positions are correlated to the software processing table.

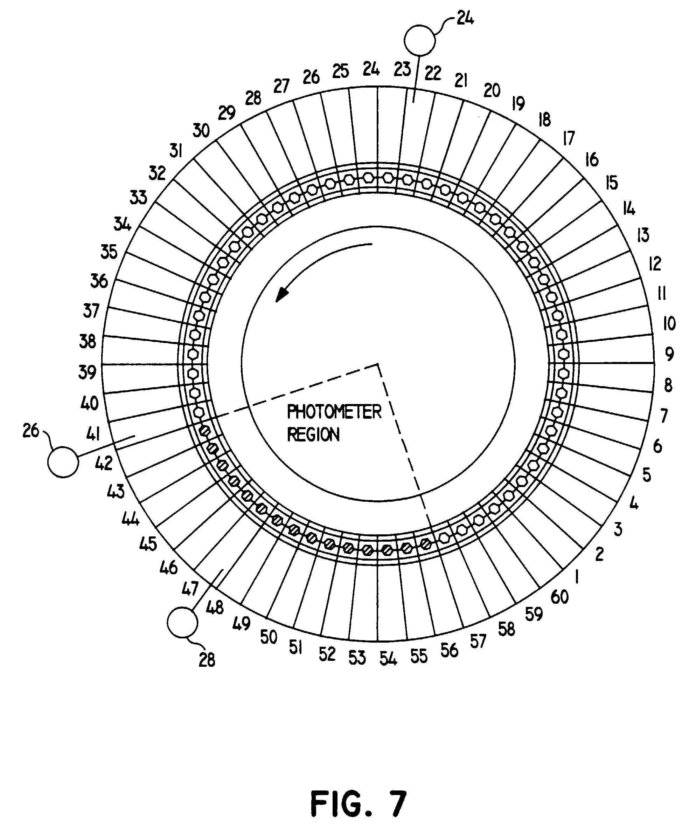

In conducting a prothrombin time test, reference is now made to FIG.4 and FIG.7, where reaction containers 11 are uploaded at reaction wheel slots 1 and 2. The reaction containers are preheated in reaction wheel slots 3 and 4. Sample is added to one container at sampling station Fig. 7, 6. The reaction containers are sequentially indexed each ten seconds to reaction slot 47, for the same reaction container to receive a predetermined amount of thromboplastin from reagent reservoir well 28. The reaction containers are then indexed through a series of detector means at reaction wheel slots 48-56. See Fig. 7. In this way the rate of clot formation can be detected. The reaction containers are indexed through slot 57 to reaction wheel slot 58, where it is then removed from the reaction carousel to be sealed and discarded. Then the reaction wheel is indexed to slot 60 where a sensor means (not shown) detects the empty reaction container position.

Similarly, an activated partial thromboplastin time clotting assay can be conducted using the reagents in reagent reservoirs 24 and 26, FIG.4. In this assay, reaction containers 11 are uploaded up at reaction wheel slots 1 and 2. The reaction containers are preheated in reaction wheel slots 3 and 4. Sample is added to one container at sampling station Fig. 7, 6. The reaction containers are indexed to reaction slot 22 for the same container to receive a predetermined amount of actin, from reagent reservoir 24. The reaction containers are then indexed to reaction wheel slot 41 for the same container to receive a predetermined amount of CaCl₂, from reagent reservoir 26. The reaction containers are then indexed through reaction wheel slots 42-56, through a series of detector means so that clot formation can be detected. See Fig. 7. The reaction containers are then indexed to reaction wheel slot 58 to be removed and sealed and then the reaction wheel indexes to slot 60 where a sensor means (not shown) detects the empty cuvette position.

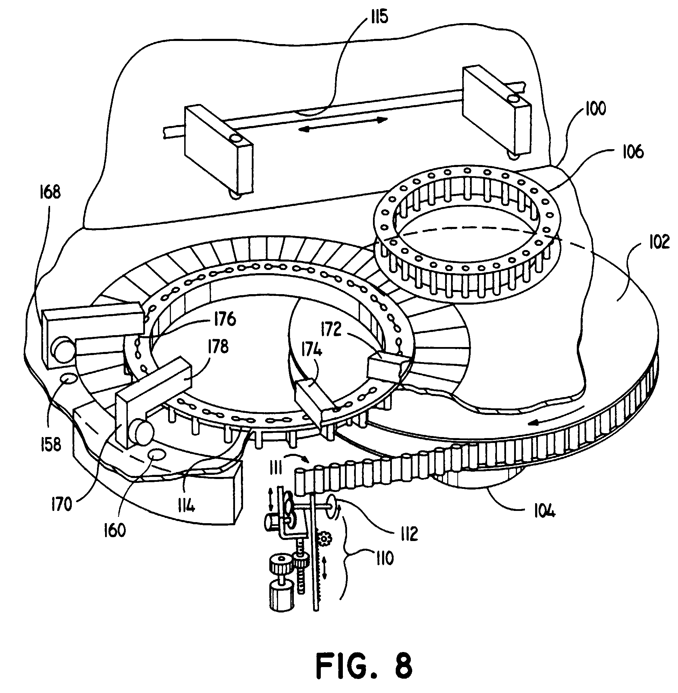

Referring now to Figure 8, an alternative embodiment of the apparatus is shown generally by reference to numeral 100. This apparatus is designed to perform clotting and chromogenic assays. A reaction container wheel 102 is used to hold a belt of joined reaction containers 104. The reaction containers 104 are spooled off of the reaction container wheel 102 to the reaction container transfer mechanism 110, cut in to units of two reaction containers 111 by cutting wheels 112 and uploaded on to reaction wheel 114. The reaction container transfer means is the same as in the previously discussed embodiment. A predetermined amount of sample is automatically pipetted from sample wheel 106 to reaction containers 111 on reaction wheel 114 using pipette arm 115 or alternatively to a sampling station (not shown).

On the reaction wheel 114 the samples are warmed to 37°C using conventional heating techniques. The reaction wheel 114 is indexed in steps to advance reaction containers 111. The reaction wheel 114 advances the reaction containers 111 by driving means (not shown) such as a servo drive system that assures smooth indexes, but stepper motors (not shown) could be used instead.

The reaction wheel 114 has in this embodiment sixty reaction container positions (not shown). The reaction wheel 114 has sixty positions, and indexes every ten seconds. A plurality of refrigerated or cooled reagent reservoir wells 158, 160, 162 and 164 and a like number of pumps 168, 170, 172 and 174, deliver measured quantities of reagents to plasma samples for which clotting times are to be determined. Reagent is pumped from the four reagent reservoir wells 158 (actin), 160 (CaCl₂), 162 (thrombin) and 164 (thromboplastin). A plurality of reagent nozzles 176, 178, 180 (not shown) and 182 (not shown) add reagents to reaction containers. Since each reagent reservoir well has identical configuration, reference is made to FIG.6 of the previously described embodiment for additional detail.

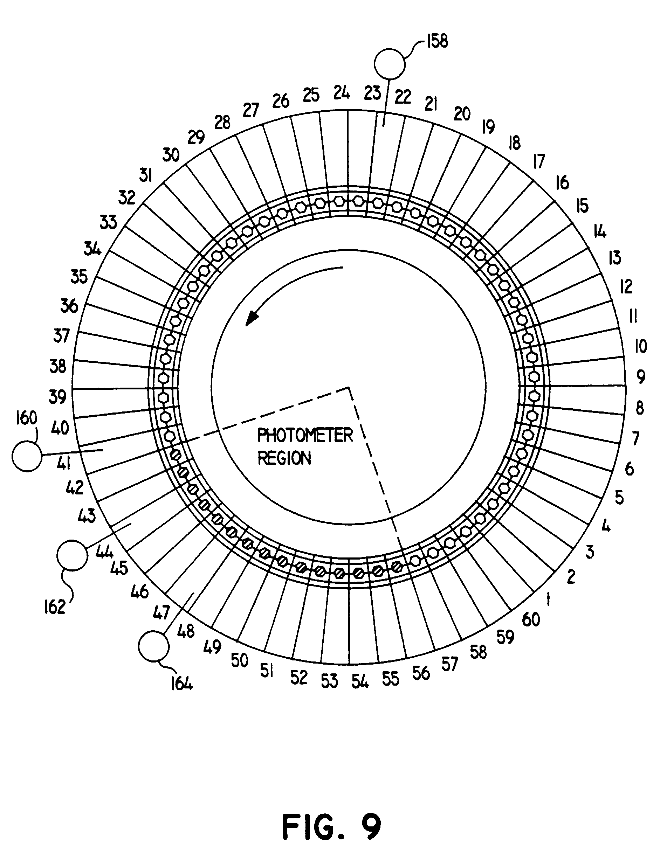

The position of a test sample on the reaction wheel 114 correlated to the software processing table serves to identify the sample and the tests required for that sample, and thus the required reagents necessary and the detection devices (not shown). As the sample indexes on the reaction wheel 114, incubation time is allocated allowing ample time for each reaction container set 111 to reach the required temperature. The reaction wheel 114 is indexed in steps to advance reaction containers 111. The reaction wheel 114 advances the reaction containers 111 by driving means such as a servo drive (not shown) or equivalent system assuring smooth indexes. The reaction container 111 is then indexed through a plurality of detection means. See e.g. Fig.9. The rate of reaction is detected without changing the rate of indexing of the reaction wheel.

In conducting a prothrombin time clotting test, reference is now made to FIG.9, where reaction containers are loaded at reaction wheel slots 1 and 2. Reaction containers 111 are preheated in reaction wheel slots 3 and 4. Sample is added at reaction wheel slot 5 to one container. The reaction containers 111 are then indexed to reaction slot 47 for the same container, to receive a predetermined amount of thromboplastin from reagent reservoir well 164. The reaction containers 111 are then indexed through reaction wheel slots 48-56, through a series of detection means Fig.9 and see e.g. Fig.1, 48, so that the rate of clot formation time can be detected, at slots 48-56. The reaction containers are indexed to reaction wheel slot 58, to be removed and sealed. Then the reaction wheel is indexed to slot 60 where a sensor (not shown) detects the empty reaction container 111 position. The cycle then repeats for a new sample.

Similarly, an activated partial thromboplastin clotting assay can also be conducted using the reagents in reagent wells 158 and 160. See FIG.9. Reaction containers 111 are up loaded at reaction wheel slots 1 and 2. Reaction containers 111 are preheated in reaction wheel slots 3 and 4. Sample is added at reaction wheel slot 5 to one container. The reaction containers 111 are then indexed to reaction slot 22, FIG.9, to receive a predetermined amount of actin from reagent well 158. The reaction containers 111 are then indexed to reaction wheel slot 41 for the same container, to receive a predetermined amount of CaCl₂ from reagent well 160. The reaction containers 111 are then indexed through reaction wheel slots 42-56, through a plurality of detection means, see Fig.9 and e.g. Fig.4,48 where the rate of clot formation can be detected. The reaction container 111 is then indexed to reaction wheel slot 58, where it is removed to be sealed and discarded. Then the reaction wheel is indexed to slot 60 where a sensor (not shown) detects the empty reaction container 111. The cycle then repeats for a new sample.

In a thrombin clotting time test, reference is made to FIG.9, where reaction containers are up-loaded to reaction wheel slots 1 and 2. The reaction container is preheated in reaction wheel slots 3 and 4. Sample is added at reaction wheel slot 5 to one container. The reaction containers 111 are then indexed to reaction slot 44 for the same container, to receive a predetermined amount of thrombin from reagent reservoir well 162. The reaction containers 111 are then indexed through reaction wheel slots 43-55, through a plurality of detection means (e.g. Figs. 9 and 4, 48), so that clot formation time can be detected. Reaction containers 111 are then indexed to reaction wheel slot 58 where they are removed to be sealed and discarded. The reaction wheel indexes through 59 to slot 60, where the wheel is checked for open position by a sensor (not shown).

In a prothrombin time chromogenic assay, reference is made to FIG.9, where reaction containers 111 are loaded at reaction wheel slots 1 and 2. The reaction container 111 is preheated in reaction wheel slots 3 and 4. Sample is added to reaction wheel slot 5 to one container. Reaction containers 111 are then indexed to reaction slot 47 for the same container, to receive a predetermined amount of the chromogenic reagent from reagent reservoir well 164. The reaction containers 111 are then indexed through reaction wheel slots (e.g. Figs.9 and 4, 48), through a series of detection means, so that the rate of color formation can be detected. The reaction containers 111 are then indexed to reaction wheel slot 58 where they are removed to be sealed and discarded. Then the reaction wheel is indexed to slot 60 where a sensor means (not shown) detects the empty reaction container 111. The cycle then repeats for a new sample.

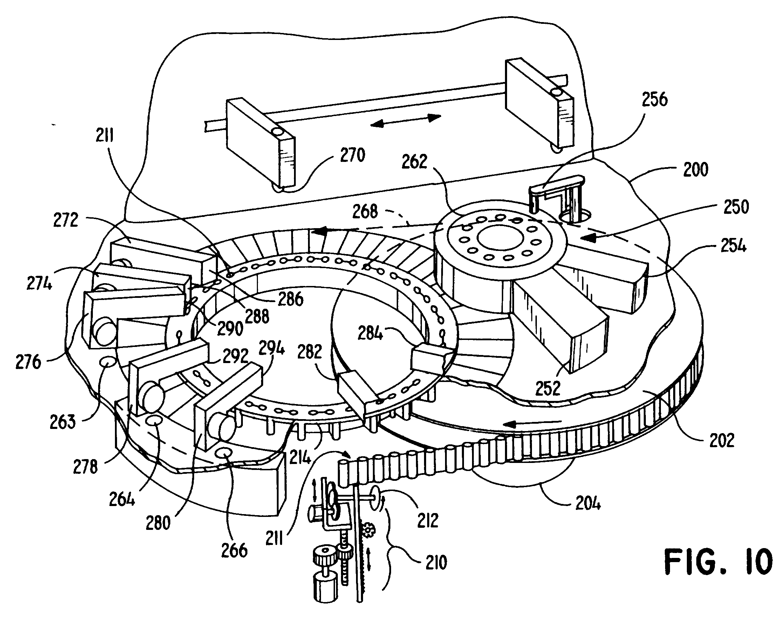

Referring now to Figure 10 an embodiment of the apparatus is shown generally by reference to numeral 200. This apparatus is designed to randomly perform chromogenic and clotting assays. In particular, this apparatus provides a further automated function of automatically sampling plasma from a test tube. This apparatus includes a sample handler means 250 including: tube loading 252 and tube unloading arms 254, a through-the-stopper sampling means, sample wheel 262, sample transfer mechanism 268 and sample pipette arm 270.

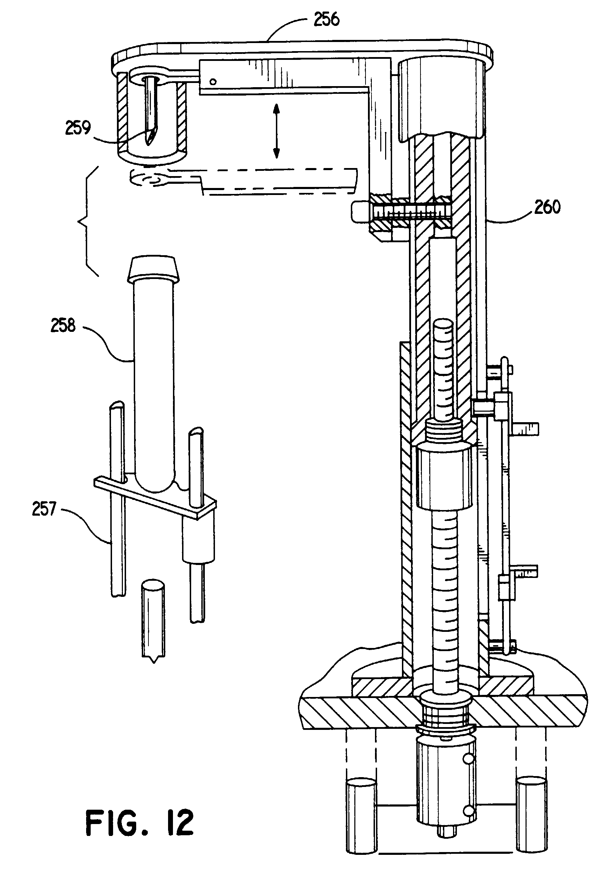

The through-the-stopper sampling system as disclosed in Mazza et al., U.S. Patent No. 4,951,512 (hereby incorporated by reference) is used in this embodiment. See FIG.12. The system includes a carousel assembly 262 which receives sample containers and moves them to a first location from a test tube storage rack 252. At the first location a lift assembly 257 moves each sample container 258 upward against a puncture tube 259 of a penetrating assembly 256. This puncture tube 259 provides an opening in the closure of the container. The system takes a sample through this opening or inserts a probe through the opening to remove sample. After the system has performed the sampling, a stripper assembly 260 strips the container from the puncture tube, allowing the opening to close. The sampled container 258 then proceeds to storage rack 254 to be discarded.

Each test tube is labeled with a bar code to instruct the instrument which assay is to be conducted and to identify the patient sample. A predetermined amount of sample is automatically pipetted from sample wheel 262 to reaction containers 211 on reaction wheel 214 using pipette arm 270 on sample transfer mechanism 268 or alternatively to a sampling station (not shown).

A reaction container wheel 202 is used to hold a belt of joined reaction containers 204. The reaction containers 204 are spooled off the reaction container wheel 202 to a reaction container transfer mechanism 210, cut into units of two reaction containers 211 by cutting wheels 212 and up-loaded on to reaction wheel 214.

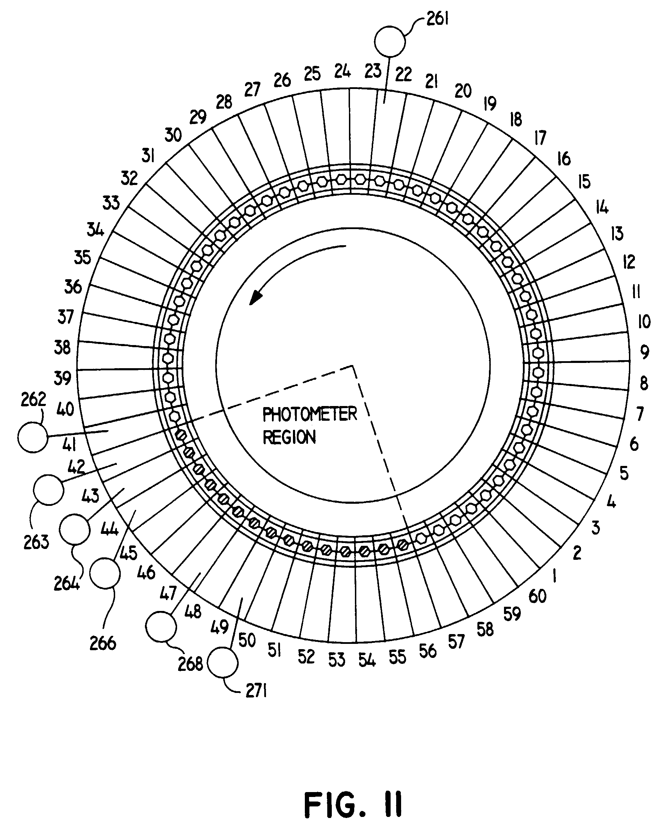

The turntable advances the reaction containers by driving means (not shown), such as a servo drive or equivalent system assuring smooth indexing. A plurality of refrigerated or cooled reagent reservoir wells 261 (actin), 262 (anti-thrombin III "thrombin reagent"), 263 (CaCl₂), 264 (TCT thrombin), 266 (thrombin), 268 (thromboplastin) and 271 (antithrombin III substrate) and a like number of pumps 272, 274, 276, 278, 280, 282 and 284 deliver measured quantities of reagents to plasma samples for which clotting times are to be determined. A plurality of reagent addition nozzles 286, 288, 290, 292, 294, 296 (not shown) and 298 (not shown) add reagents to the reaction containers 211. Reagent is pumped from seven reagent reservoir wells. Since each reagent well has identical configuration, reference is made to FIG.6 of a previously described embodiment. The position of a test sample on the reaction wheel 214 serves to identify the sample, and, thus the reagents added and the positions of the detecting sensors. The reaction containers are indexed through a plurality of detection means (e.g. Figs.11 and 4, 48). The rate of clot formation is detected without changing the rate of indexing of the reaction wheel.

In conducting a prothrombin test, reference is now made to FIG.11, where reaction containers are loaded at reaction wheel slots 1 and 2. The reaction containers 211 are preheated in reaction wheel slots 3 and 4. Sample is added to the reaction wheel at slot 5 by pipette arm 270 on to the reaction container. The reaction containers 211 are then sequentially indexed each ten seconds to reaction slot 47 so that the same container receives a predetermined amount of thromboplastin from reagent reservoir well 268. The reagent is delivered by pump 282 through nozzle 296. The reaction containers 211 are then indexed through a series of detector means, slots 48-56, so that the rate of clot formation time can be detected. The reaction containers 211 are then indexed to reaction wheel slot 58 where they are removed to be sealed and discarded. Then the reaction wheel 214 is indexed to slot 60 where a sensor (not shown) detects the empty reaction container position.

An activated partial thromboplastin time clotting assay is conducted as follows: a reaction container is loaded at reaction wheel slots 1 and 2. FIG.11. The reaction containers 211 are preheated in reaction wheel slots 3 and 4. Sample is added to the reaction wheel at slot 5 by pipette arm 270 on to a reaction container. The reaction containers 211 are then indexed to reaction slot 22 so that the same container receives a predetermined amount of actin from reagent reservoir 261. The reagent is delivered by pump 272 through nozzle 286. The reaction containers 211 are then indexed to reaction wheel 214 slot 42 so that the same container receives a predetermined amount of CaCl₂ from reagent reservoir 262. The reagent is delivered by pump 276 through nozzle 290. The reaction containers 211 are then indexed through reaction wheel slots 44-56, through a series of detector means (see Figs.11 and 4,48) so that clot formation can be detected. The reaction containers 211 are then indexed to reaction wheel slot 58 where they are removed to be sealed and discarded. Then the reaction wheel 214 is indexed to slot 60 where a sensor (not shown) detects the empty reaction container position.

In a thrombin clotting time test, reference is made to FIG.11 where reaction containers 211 are loaded at reaction wheel slots 1 and 2. The reaction containers 211 are preheated in reaction wheel slots 3 and 4. Sample is added to the reaction wheel at slot 5 by pipette arm 270 to a reaction container. The reaction containers 211 are then indexed to reaction slot 43 so that the same container receives a predetermined amount of TCT thrombin from reagent reservoir well 264. The reagent is delivered by pump 278 through nozzle 292. The reaction containers 211 are then indexed through reaction wheel slots 44-56, through a series of detector means (see Figs.11 and 4, 48) so that clot formation time can be detected. The reaction containers 211 are then indexed to reaction wheel slot 58 where it is removed to be sealed and discarded. Then the reaction wheel 214 is indexed to slot 60 where a sensor means (not shown) detects the empty reaction container position.

In a Prothrombin Factor test, reference is made to FIG.11, where reaction containers 211 are loaded at reaction wheel slots 1 and 2. The reaction containers 211 are preheated in reaction wheel slots 3 and 4. Sample is added to the reaction wheel at slot 5 by pipette arm 270 to a reaction container. The reaction containers 211 are then indexed to slot 7 so that the same container receives 100 µl of deficient plasma from the sample pipettor 270. The reaction containers 211 are then indexed to reaction slot 47 so that the same container receives a predetermined amount of thromboplastin from reagent reservoir well 268. The reagent is delivered by pump 282 through nozzle 296. The reaction containers are then indexed to reaction slots 48-56, through a series of detector means (see Figs.11 and 4, 48) so that clot formation time can be detected. The reaction containers 211 are indexed to reaction wheel slot 58 where it is removed to be sealed and discarded. Then the reaction wheel is indexed to slot 60 where a sensor means (not shown) detects the empty reaction container position.

In a prothrombin chromogenic assay, reference is made to FIG.11 where reaction containers 211 are up-loaded to reaction wheel slots 1 and 2. The reaction containers are preheated in reaction wheel slots 3 and 4. Sample is added to the reaction wheel at slot 5 by pipette arm 270 to a reaction container. The reaction containers are then indexed to reaction slot 49 so that the same container receives a predetermined amount of chromogenic reagent from reagent reservoir well 270. The reagent is delivered by pump 284 through nozzle 298. The reaction containers 211 are indexed through a series of detector means (see Figs.11 and 4, 48) so that the rate of color formation time can be detected. The reaction containers 211 are indexed to reaction wheel 214 slot 58 to be removed and sealed. Then the reaction wheel is indexed to slot 60 where a sensor means (not shown) detects the empty reaction container 211 position.

In a fibrinogen assay, reference is made to FIG.11, where reaction containers 211 are up loaded at reaction wheel slots 1 and 2. The reaction containers 211 are preheated in reaction wheel slots 3 and 4. Sample is added to the reaction wheel at slot 5 by pipette arm 270 to a reaction container. The reaction containers 211 are then indexed to reaction slot 44 so that the same container receives a predetermined amount of thrombin from reagent reservoir well 266. The reagent is delivered by pump 280 through nozzle 294. The reaction containers 211 are indexed through reaction wheel slots 45-56, through a series of detector means (see Figs.11 and 4, 48) so that clot formation time can be detected. The reaction containers 211 are indexed to reaction wheel slot 58 where they are removed to be sealed and discarded. Then the reaction wheel 214 is indexed to slot 60 where a sensor means (not shown) detects the empty reaction container 211 position.

In antithrombin III assay, reference is made to FIG.11, where reaction containers 211 are up loaded at reaction wheel slots 1 and 2. The reaction containers 211 are preheated in reaction wheel slots 3 and 4. Sample is added to the reaction wheel at slot 5 by pipette arm 270 to a reaction container. The reaction containers 211 are then indexed to reaction slot 41 so that the same reaction container receives a predetermined amount of thrombin reagent from reagent reservoir well 262. The reagent is delivered by pump 274 through nozzle 286. The reaction containers are then indexed through to slot 49 so that the same container receives chromogenic substrate from reservoir well 270. The reagent is delivered by pump 284 through nozzle 298. The reaction containers 211 are then indexed through reaction wheel slots 50-56, through a series of detector means (see Figs.11 and 4, 48) so that color formation can be detected. The reaction containers 211 are then indexed to reaction wheel slot 58 where it is removed to be sealed and discarded. Then the reaction wheel 214 is indexed to slot 60 where a sensor means (not shown) detects the empty reaction container position.

In an activated partial thromboplastin time factor assay, reference is made to FIG.11, where reaction containers 211 are up loaded at reaction wheel slots 1 and 2. The reaction containers 211 are preheated in reaction wheel slots 3 and 4. Sample is added to the reaction wheel at slot 5 by pipette arm 270 to a reaction container. At slot 7 deficient plasma (100 µl) is added from the sample pipettor 270 to the same reaction container. The reaction containers 211 are indexed to reaction slot 22 so that the same container receives a predetermined amount of actin, from reagent reservoir 261. The reaction containers 211 are then indexed to reaction wheel slot 41 so that the same container receives a predetermined amount of CaCl₂, from reagent reservoir 263. The reaction containers 211 are then indexed through reaction wheel slots 42-56, through a series of detector means (see Figs.11 and 4, 48) so that clot formation can be detected. The reaction containers are then indexed to reaction wheel slot 58 to be removed and sealed and then the reaction wheel 214 indexes to slot 60 where a sensor means (not shown) detects the empty cuvette position.

In yet another embodiment additional assays can be added by adding more reagent capacity, e.g. wells, pumps and nozzles. In plasminogen assay, reference is made to FIG.11, where reaction containers 211 are up loaded at reaction wheel slots 1 and 2. The reaction containers 211 are preheated in reaction wheel slots 3 and 4. Sample is added to the reaction wheel at slot 5 by pipette arm 270 to a reaction container. The reaction containers 211 are indexed to reaction slot 31 so that the same container receives 250 µl of streptokinase from reagent reservoir well 300 (not shown). The reagent is delivered by pump 302 (not shown) through nozzle 304 (not shown). The reaction containers 211 are then indexed to slot 48 so that the same container receives chromogenic substrate from reagent well (not shown). The reagent is delivered by pump 308 (not shown) through nozzle 310 (not shown). The reaction containers 211 are indexed through reaction wheel slots 49-56, through a series of detector means (see Figs.11 and 4, 48) so that color formation can be detected. The reaction containers 211 are indexed to reaction wheel slot 58 where it is removed to be sealed and discarded. The reaction containers 211 are indexed to reaction wheel slot 58 to be removed and sealed. Then the reaction wheel 214 is indexed to slot 60 where a sensor means (not shown) detects the empty reaction container position.

In a protein C chromogenic assay reference is made to FIG.11, where reaction containers 211 are up loaded at reaction wheel slots 1 and 2. The reaction containers 211 are preheated in reaction wheel slots 3 and 4. Sample is added to the reaction wheel at slot 5 by pipette arm 270 to a reaction container. The reaction containers 211 are then indexed to slot 7 so that the same container receives protein C activator from reagent well 312 (not shown). The reagent is delivered by pump 314 (not shown) through nozzle 316 (not shown). The reaction containers 211 are then indexed to reaction slot 36 so that the same container receives a predetermined amount of chromogenic substrate from reagent reservoir well 318 (not shown). The reagent is delivered by pump 320 (not shown) through nozzle 322 (not shown). The reaction containers 211 are then indexed to slot 48 so that the same container receives chromogenic substrate from reagent well 324 (not shown). This reagent is delivered by pump 326 (not shown) through nozzle 328 (not shown). The reaction containers 211 are indexed through reaction wheel slots 49-56, through a series of detector means (see Figs.11 and 4, 48) so that color formation can be detected. The reaction containers 211 are then indexed to reaction wheel slot 58 to be removed and sealed. Then the reaction wheel 214 is indexed to slot 60 where a sensor means (not shown) detects the empty reaction container position.

In a FIX chromogenic assay for Factor IX, reference is made to FIG.11, where reaction containers 211 are up loaded at reaction wheel slots 1 and 2. The reaction containers 211 are preheated in reaction wheel slots 3 and 4. Sample is added to the reaction wheel at slot 5 by pipette arm 270 to a reaction container. The reaction containers 211 are then indexed to reaction slot 19 for the same reaction container to receive a predetermined amount (100 µl) of Factor IXa reagent from reagent reservoir well 330 (not shown). This reagent is delivered by pump 332 (not shown) through nozzle 334 (not shown). The reaction containers 211 are then indexed to reaction wheel slot 36 so that the same reaction container receives reagent Factor VIII and X, and then to reaction wheel slot 46, to receive chromogenic substrate from reservoir 336 (not shown). The reagent is delivered by pump 338 (not shown) through nozzle 340 (not shown). The reaction containers 211 are indexed through reaction wheel slots 47-56, through a series of detector means (see Figs.11 and 4, 48) so that color formation can be detected. The reaction containers 211 are indexed to reaction wheel slot 58 to be removed and sealed. Then the reaction wheel 214 is indexed to slot 60 where a sensor means (not shown) detects the empty reaction container 211 position.

In an activated partial thromboplastin time chromogenic assay reference is made to FIG.11 where reaction containers 211 are up loaded at reaction wheel slots 1 and 2. The reaction containers 211 are preheated in reaction wheel slots 3 and 4. Sample is added to the reaction wheel at slot 5 by pipette arm 270 to a reaction container. The reaction containers 211 are then indexed to reaction slot 22 for the same container to receive a predetermined amount of actin from reagent reservoir well 261. The reagent is delivered by pump 272 through nozzle 286. The reaction containers 211 are then indexed to slot 41 for the same container to receive a chromogenic substrate from reagent well 342 (not shown). The reagent is delivered by pump 344 (not shown) through nozzle 346 (not shown). The reaction containers 211 are indexed through reaction wheel slots 42-56, through a series of series of read stations (see Figs.11 and 4, 48), so that clot formation time can be detected. The reaction containers 211 are then indexed to reaction wheel slot 58 where it is removed to be sealed and discarded. Then the reaction wheel 214 is indexed to slot 60 where a sensor means (not shown) detects the empty reaction container 211 position.

## Claims

1. A random access coagulation apparatus for detecting different reactions in plasma samples, the apparatus comprising a reaction wheel (14,114) carrying a plurality of reaction containers (4,104), a sample transfer means (6,106) to deliver sample to said containers, a reagent transfer station (18-22; 30-34) positioned along the reaction wheel and connected to a reagent source (24-28; 158-164; 261-271) for delivery of a reagent for a first reaction, a second reagent transfer station (18-22; 30-34) connected to a second reagent source (24-28; 158-164; 261-271) for delivery of a second reagent for a second reaction which is different from the first reaction, a plurality of photometers (48) in a series defining a photometer region for reaction detection, and a drive means adapted for indexing the reaction wheel, the reagent transfer stations being spaced at different circumferential distances away from the photometer region such that sample incubation with the first reagent is complete before the first reaction is detected by the photometer region, and sample incubation with the second reagent is complete before the second reaction is detected by the photometer region,
characterised in that the drive means is adapted for indexing the reaction wheel at a constant rate, each of said photometers (48) being positioned along the wheel for measuring a portion of a clotting time of said sample in a selected one of said reaction containers, the apparatus including means connected to the photometer for determining from said portions of clotting times a rate of clot formation occurring in said selected one of said reaction containers.

2. The apparatus of Claim 1 in which said photometer region comprises a series of at least 15 photometers (48).

3. The apparatus of any preceding claim in which said constant rate is one index per 10 seconds and said reaction wheel (14,114) includes 60 of said reaction containers (4,104).

4. The apparatus of any preceding claim in which said first reagent source includes an activated partial thromboplastin time (APTT) test reagent and said second reagent source comprises a prothrombin time (PT) test reagent.

5. The apparatus of any one of Claims 1 to 3 in which one of said first and second reagent sources includes a clotting assay reagent.

6. The apparatus of any one of Claims 1 to 3 in which one of said first and second reagent sources includes a chromogenic assay reagent.

7. The apparatus of any one of Claims 1 to 5 in which said reagents are selected from a prothrombin time (PT) test reagent, an activated partial thromboplastin time (APTT) test reagent, a thrombin clotting time test reagent, and a prothrombin time chromogenic assay reagent.

8. The apparatus of any preceding claim, including a reaction container wheel (2,102) comprising a spool of reaction containers (4,104); and a reaction container transfer means (10,12;110,112) for transferring said reaction containers to the reaction wheel.

9. The apparatus of any preceding claim, including means for discarding said reaction containers (4,104) from said reaction wheel (14,114).

10. The apparatus of any preceding claim wherein said reaction reagent transfer stations (18-22; 30 to 34) and photometers (48) act in response to bar code instructions on said reaction containers (4,104).

11. The apparatus of any preceding claim wherein each photometer (48) is bichromatic.

12. A method of operating the apparatus of any preceding claim for detecting said first and second reactions in plasma samples, comprising indexing the reaction wheel (14,114) at a constant rate, delivering a respective sample to a first and a second container (4,104), delivering said first reagent to the first container when said first container has been indexed to the first reagent transfer station, delivering said second reagent to the second container when said second container has been indexed to the second reagent transfer station, said second container being indexed past the first transfer station without delivering the first reagent to the second container, and detecting the first and second reactions with said photometers when the respective container has been indexed to said photometer region, whereby respective sample incubation with the first and second reagents is complete before detection of the reactions and without changing said constant rate of indexing, the reaction detection step including measuring with each of the photometers (48) a portion of a clotting time of said sample in a selected one of said reaction containers, and determining a rate of clot formation occurring in said selected one of said reaction containers from said portions of said clotting means.

13. The method of Claim 12 including operating the apparatus at a flowthrough rate of at least 360 tests per hour without changing said constant rate of indexing and while conducting said first and second reactions.

## Patentansprüche

1. Koagulationsvorrichtung mit Zufallszugriff zur Abtastung verschiedener Reaktionen in Plasmaproben, wobei die Vorrichtung folgendes aufweist:
- Ein Reaktionskarussell (14, 114), das eine Vielzahl von Reaktionsgefäßen (4, 104) trägt,
- eine Probenüberführungseinrichtung (6, 106), um den Gefäßen Proben zuzuführen,
- eine Überführungsstation für Reagenzien (18-22, 30-34), die entlang des Reaktionskarussells angeordnet und an eine Reagensquelle (24-28; 158-164; 261-271) für die Zuführung eines ersten Reagens für eine erste Umsetzung angeschlossen ist,
- eine zweite Überführungsstation für Reagenzien (18-22; 30-34), die an eine zweite Reagensquelle (24-28; 158-164; 261-271) für die Zuführung eines zweiten Reagens für eine zweite Umsetzung angeschlossen ist, die von der ersten Umsetzung verschieden ist,
- eine Vielzahl von Photometern (48) in einer Reihenanordnung, die einen Photometerbereich zur Reaktionsabtastung bilden, und
- eine Antriebseinrichtung, die zum Weiterschalten des Reaktionskarussells ausgelegt ist, wobei die Überführungsstationen für die Reagenzien in verschiedenen Umfangsabständen von dem Photometerbereich entfernt so angeordnet sind, daß die Probeninkubation mit dem ersten Reagens beendet ist, bevor die Umsetzung von dem Photometerbereich abgetastet wird, und wobei die Probeninkubation mit dem zweiten Reagens beendet ist, bevor die zweite Umsetzung mit dem Photometerbereich abgetastet wird,
dadurch gekennzeichnet,
daß die Antriebseinrichtung so ausgelegt ist, daß sie das Reaktionskarussell mit einer konstanten Geschwindigkeit weiterschaltet, wobei jedes der Photometer (48) entlang des Karussells angeordnet ist, um einen Teil einer Gerinnungszeit der Probe in einem ausgewählten Gefäß der Reaktionsgefäße zu messen, wobei das Gerät Einrichtungen aufweist, die mit dem Photometer verbunden sind, um aus den Teilen der Gerinnungszeit eine Geschwindigkeit der Gerinnselbildung zu bestimmen, die in dem ausgewählten Gefäß der Reaktionsgefäße auftritt.

2. Vorrichtung nach Anspruch 1,
bei der der Photometerbereich eine Reihe von wenigstens 15 Photometern (48) aufweist.

3. Vorrichtung nach einem der vorhergehenden Ansprüche,
bei der die konstante Geschwindigkeit eine Weiterschaltung pro 10 Sekunden ist und das Reaktionskarussell (14, 114) eine Anzahl von 60 Reaktionsgefäßen (4, 104) enthält.

4. Vorrichtung nach einem der vorhergehenden Ansprüche,
bei der die erste Reagensquelle ein aktiviertes Thromboplastinzeit (APTT) Testreagens enthält und die zweite Reagensquelle ein Prothrombinzeit (PT) Testreagens aufweist.

5. Vorrichtung nach einem der Ansprüche 1 bis 3,
bei der die eine der ersten und zweiten Reagensquellen ein Reagens zum Nachweis der Gerinnung enthält.

6. Vorrichtung nach einem der Ansprüche 1 bis 3,
bei der die eine der ersten und zweiten Reagensquellen ein chromogenes Nachweisreagens enthält.

7. Vorrichtung nach einem der Ansprüche 1 bis 5,
bei der die Reagenzien ausgewählt sind aus einem Prothrombinzeit (PT) Testreagens, einem aktivierten partiellen Thromboplastinzeit (APTT) Testreagens, einem Thrombingerinnungszeit-Testreagens und einem chromogenen Prothrombinzeit-Nachweisreagens.

8. Vorrichtung nach einem der vorhergehenden Ansprüche,
die ein Reaktionsgefäß-Karussell (2, 102) enthält, das eine Ansammlung von Reaktionsgefäßen (4, 104) und eine Überführungseinrichtung für Reaktionsgefäße (10, 12; 110, 112) zur Überführung der Reaktionsgefäße auf das Reaktionskarussell aufweist.

9. Vorrichtung nach einem der vorhergehenden Ansprüche,
die Einrichtungen zum Ausscheiden von Reaktionsgefäßen (4, 104) von dem Reaktionskarussell (14, 114) aufweist.

10. Vorrichtung nach einem der vorhergehenden Ansprüche,
bei der die Überführungsstationen für Reaktionsreagenzien (18-22; 30-34) und die Photometer (48) in Abhängigkeit von Strichcode-Anweisungen auf den Reaktionsgefäßen (4, 104) arbeiten.

11. Vorrichtung nach einem der vorhergehenden Ansprüche,
bei der jedes Photometer (48) bichromatisch ist.

12. Verfahren zum Betreiben der Vorrichtung nach einem der vorhergehenden Ansprüche zum Abtasten der ersten und der zweiten Umsetzung in Plasmaproben, das folgendes aufweist:
Weiterschalten des Reaktionskarussells (14, 114) mit einer konstanten Geschwindigkeit,
Zuführen einer jeweiligen Probe zu einem ersten und einem zweiten Gefäß (4, 104),
Zuführen des ersten Reagens zu dem ersten Gefäß, wenn das erste Gefäß zu der ersten Reagensüberführungsstation weitergeschaltet worden ist,
Zuführen des zweiten Reagens zu dem zweiten Gefäß, wenn das zweite Gefäß zu der zweiten Reagensüberführungsstation weitergeschaltet worden ist, wobei das zweite Gefäß an der ersten Überführungsstation weitergeschaltet wird, ohne daß das erste Reagens dem zweiten Gefäß zugeführt wird, und Abtasten der ersten und der zweiten Umsetzung mit den Photometern, wenn das entsprechende Gefäß zu dem Photometerbereich weitergeschaltet worden ist, so daß dadurch die jeweilige Probeninkubation mit dem ersten und dem zweiten Reagens vor der Abtastung der Umsetzungen beendet ist und die konstante Weiterschaltgeschwindigkeit nicht verändert wird, wobei der Reaktionsabtastschritt umfaßt, daß mit jedem der Photometer (48) ein Teil einer Gerinnungszeit der Probe in einem ausgewählten Gefäß der Reaktionsgefäße gemessen wird und eine Geschwindigkeit der Gerinnselbildung, die in dem ausgewählten Gefäß der Reaktionsgefäße stattfindet, aus den Teilen der Gerinnungszeit bestimmt wird.

13. Verfahren nach Anspruch 12,
das den Betrieb der Vorrichtung bei einer Durchsatzrate von wenigstens 360 Tests pro Stunde ohne Änderung der konstanten Weiterschaltgeschwindigkeit umfaßt, während die ersten und zweiten Umsetzungen durchgeführt werden.

## Revendications

1. Appareil de coagulation à accès direct pour détecter différentes réactions dans des échantillons de plasma, l'appareil comprenant une roue de réaction (14, 114) portant une pluralité de récipients de réaction (4, 104), un dispositif de transfert d'échantillon (6, 106) pour introduire un échantillon dans les dits récipients, une station de transfert de réactif (18-22 ; 30-34) placée le long de la roue de réaction et connectée à une source de réactif (24-28 ; 158-164 ; 261-271) pour distribution d'un réactif pour une première réaction, une deuxième station de transfert de réactif (18-22 ; 30-34) connectée à une deuxième source de réactif (24-26 ; 158-164 : 261-271) pour distribution d'un deuxième réactif pour une deuxième réaction qui est différente de la première réaction, une pluralité de photomètres (48) dans une série définissant une région de photométrie pour détection des réactions, et un dispositif d'entraînement prévu pour indexer la roue de réaction, les stations de transfert de réactif étant espacées à différentes distances circonférentielles de la région de photométrie de sorte que l'incubation de l'échantillon avec le premier réactif est terminée avant que la première réaction soit détectée par la région de photométrie, et de sorte que l'incubation de l'échantillon avec le deuxième réactif est terminée avant que la deuxième réaction soit détectée par la région de photométrie, caractérisé en ce que le dispositif d'entraînement est prévu pour indexer la roue de réaction à une vitesse constante, chacun des dits photomètres (48) étant placé le long de la roue pour mesurer une portion d'un temps de coagulation du dit échantillon dans un récipient choisi des dits récipients de réaction, l'appareil comprenant des moyens connectés au photomètre pour déterminer, à partir des dites portions de temps de coagulation, une vitesse de formation de caillot se produisant dans le dit récipient choisi des dits récipients de réaction.

2. Appareil suivant la revendication 1, dans lequel la dite région de photométrie comprend une série d'au moins quinze photomètres (48).

3. Appareil suivant une quelconque des revendications précédentes, dans lequel la dite vitesse constante est d'un index toutes les 10 secondes, et la dite roue de réaction (14, 114) comprend 60 dits récipients de réaction (4, 104).

4. Appareil suivant une quelconque des revendications précédentes, dans lequel la dite première source de réactif comprend un réactif de test de thromboplastine partielle activée (APTT) et la dite deuxième source de réactif comprend un réactif de test de temps de prothrombine (PT).

5. Appareil suivant une quelconque des revendications 1 à 3, dans lequel une des dites première et deuxième sources de réactif comprend un réactif d'analyse de coagulation.

6. Appareil suivant une quelconque des revendications 1 à 3, dans lequel une des dites première et deuxième sources de réactif comprend un réactif d'analyse chromogène.

7. Appareil suivant une quelconque des revendications 1 à 5, dans lequel les dits réactifs sont choisis parmi un réactif de test de temps de prothrombine (PT), un réactif de test de temps de thromboplastine partielle activée (APTT), un réactif de test de temps de coagulation de thrombine et un réactif d'analyse chromogène de temps de prothrombine.

8. Appareil suivant une quelconque des revendications précédentes, comprenant une roue de récipients de réaction (2, 102) portant une bande de récipients de réaction (4,104), et un dispositif de transfert de récipients de réaction (10,12 ; 110, 112) pour transférer les dits récipients de réaction à la roue de réaction.

9. Appareil suivant une quelconque des revendications précédentes, comprenant des moyens d'évacuation des dits récipients de réaction (4,104) de la dite roue de réaction (14,114).

10. Appareil suivant une quelconque des revendications précédentes, dans lequel les dites stations de transfert de réactif de réaction (18-22 ; 30 à 34) et les dits photomètres (48) agissent en réponse à des instructions en code à barres portées sur les dits récipients de réaction (4, 104).

11. Appareil suivant une quelconque des revendications précédentes, dans lequel chaque photomètre (48) est bichromatique.

12. Procédé d'utilisation de l'appareil suivant une quelconque des revendications précédentes pour détecter les dites première et deuxième réactions dans des échantillons de plasma, comprenant l'indexage de la roue de réaction (14,114) à une vitesse constante, l'introduction d'un échantillon respectif dans un premier et un deuxième récipients (4,104), la fourniture du dit premier réactif au premier récipient lorsque le dit premier récipient a été indexé à la première station de transfert de réactif, la fourniture du dit deuxième réactif au deuxième récipient lorsque le dit deuxième récipient a été indexé à la deuxième station de transfert de réactif, le dit deuxième récipient étant indexé au-delà de la première station de transfert sans fourniture du premier réactif au deuxième récipient, et la détection des première et deuxième réactions avec les dits photomètres lorsque le récipient respectif a été indexé à la dite région de photométrie, de sorte que l'incubation de l'échantillon respectif avec les premier et deuxième réactifs est terminée avant la détection des réactions et sans modifier la dite vitesse constante d'indexage, l'étape de détection de réaction incluant la mesure, avec chacun des photomètres (48), d'une portion d'un temps de coagulation du dit échantillon dans un récipient choisi des dits récipients de réaction, et la détermination d'une vitesse de formation de caillot se produisant dans le dit récipient choisi des dits récipients de réaction, à partir des dites portions du dit temps de coagulation.

13. Procédé suivant la revendication 12, comprenant l'utilisation de l'appareil à une capacité de production d'au moins 360 tests à l'heure sans changer la dite vitesse constante d'indexage et tout en effectuant les dites première et deuxième réactions.
